Europäisches Patentamt

European Patent Office

Office européen des brevets

(19)

(11) Veröffentlichungsnummer: **0 203 453**
**B1**

(12)     EUROPÄISCHE PATENTSCHRIFT

(45) Veröffentlichungstag der Patentschrift: **08.08.90**

(21) Anmeldenummer: **86106536.5**

(22) Anmeldetag: **14.05.86**

(51) Int. Cl.⁵: **F 16 K 31/06**

(54) Elektromagnetventil.

(30) Priorität: **25.05.85 DE 3518978**

(43) Veröffentlichungstag der Anmeldung:
**03.12.86 Patentblatt 86/49**

(45) Bekanntmachung des Hinweises auf die
Patenterteilung:
**08.08.90 Patentblatt 90/32**

(84) Benannte Vertragsstaaten:
**DE FR GB IT SE**

(56) Entgegenhaltungen:
**WO-A-83/02811**
**DE-A-2 315 425**
**DE-B-1 272 665**
**FR-A-2 461 868**
**US-A-2 828 936**

(73) Patentinhaber: **ROBERT BOSCH GMBH**
**Postfach 50**
**D-7000 Stuttgart 1 (DE)**

(72) Erfinder: **Stegmaier, Alwin**
**Tilsiter Strasse 52**
**D-7141 Schwieberdingen (DE)**

Courier Press, Leamington Spa, England.

## Beschreibung

### Stand der Technik

Die Erfindung geht aus von einem Elektromagnetventil nach der Gattung des Hauptanspruchs. Ein derartiges Ventil ist aus der WO—A—83/02811 bekannt. Der Aufbau dieses Ventils ist derart, daß es sich nur für eine ganz bestimmte Ausführung eignet.

### Vorteile der Erfindung

Das erfindungsgemäße Elektromagnetventil mit den kennzeichnenden Merkmalen des Hauptanspruchs hat demgegenüber den Vorteil, daß die Polteile zugleich als Abdeckung für den Elektromagneten dienen und auch die Durchführung von Anschluß -und Halteteile ermöglichen.

Durch die in den Ansprüchen aufgeführten Maßnahmen sind vorteilhafte Weiterbildungen und Verbesserungen der im Hauptanspruch angegebenen Merkmale möglich.

### Zeichnung

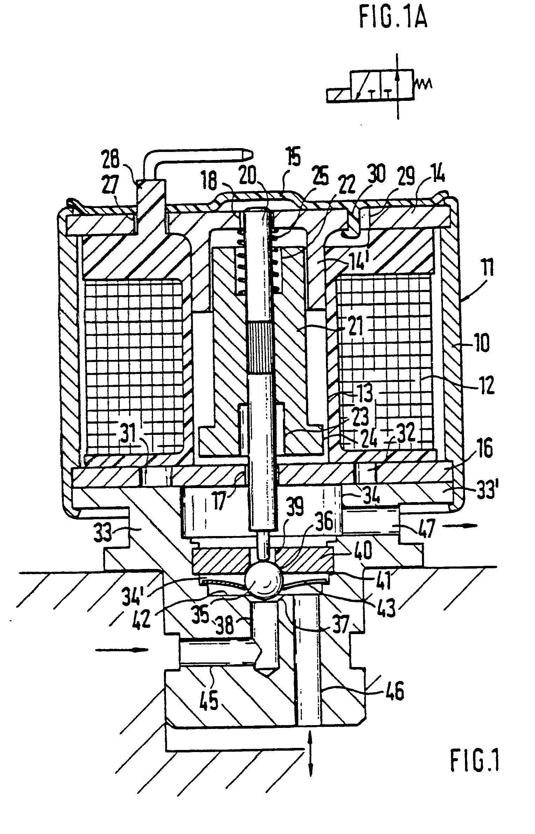

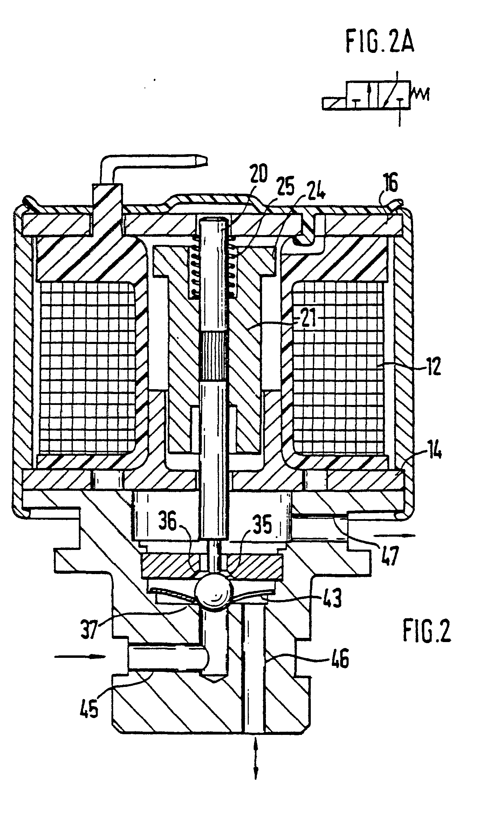

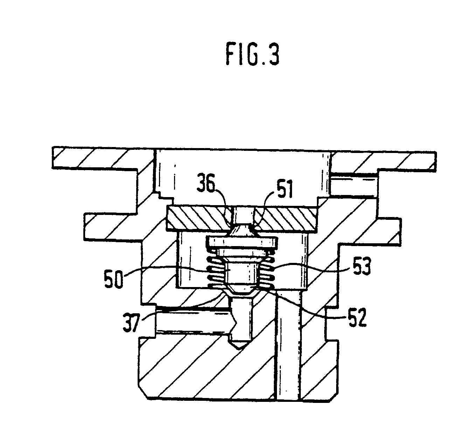

Zwei Ausführungsbeispiele der Erfindung sind in der Zeichnung dargestellt und in der nachfolgenden Beschreibung näher erläutert. Es zeigen Figur 1 einen Längsschnitt durch ein Elektromagnetventil in Bauart "stromlos offen", Figur 2 einen Längsschnitt durch ein Elektromagnetventil in Bauart "stromlos geschlossen" und in Figur 3 eine Abwandlung eines Einzelteils. Die Figuren 1a und 2a zeigen die Schaltsymbole der beiden Ventile.

### Beschreibung der Ausführungsbeispiele

In Figur 1 ist mit 10 das Gehäuse eines Elektromagneten 11 bezeichnet, der eine Spule 12 aufweist, die einen mittigen Durchgang 13 hat. Oberhalb der Spule ist eine Flanschhülse 14 angeordnet, deren mittiges hülsenartiges Teil 14' in den Durchgang 13 hineinragt. Der obere Teil des Gehäuses 10 ist zusammen mit der Flanschhülse 14 durch einen Isolierdeckel 15 verschlossen. Am unteren Teil des Elektromagnet 11 befindet sich eine Polscheibe 16, die einen mittigen Durchgang 17 hat. Einen ebensolchen mittigen fluchtenden Durchgang 18 hat die Flanschhülse 14. Durch die beiden Durchgänge 17, 18 dringt ein Stößel 20, der in einem zylinderförmiger ausgebildeten Anker 21 befestigt ist. Der Anker hat an seinen beiden Stirnseiten zylindrische Ausnehmungen 22, 23 und außerdem an seiner der Polscheibe 16 zugewandten Seite einen nach außen stehenden kleinen Flansch 24. In der zylindrischen ausnehmung 22 liegt eine Druckfeder 25, die sich mit ihrem oberen Teil an der Flanschhülse 14 abstützt. Diese Feder dient als Koppelfeder. Die Flanschhülse 14 hat außer dem mittigen Durchgang 18 noch einen versetzten Durchgang 27, durch den das Anschlußstück 28 der Spule 12 dringt. Außerdem ist in der Flanschhülse 14 ebenfalls versetzt zum Durchgang und abgewandt gegenüber dem Durchgang 27 noch ein Durchgang 29 ausgebildet, in den eine Halteklaue 30 des Isolierdeckels 15 greift. Genau dieselben Ausnehmungen und fluchtend zu jenen sind in der Polscheibe 16 zwei Durchgänge 31, 32 ausgebildet.

An die Polscheibe 16 legt sich ein Ventilgehäuse 33 an mit einem nach außen gerichteten Rand 33', der ebenfalls noch im Gehäuse 10 liegt und durch Umbördeln fest mit diesem verbunden ist. Das Ventilgehäuse 33 hat einen mittigen Innenraum 34, in den der Stößel 20 hineinragt. Dessen unteres Ende berührt einen kugelförmigen Ventilkörper 35, dem zwei Ventilsitze 36, 37 zugeordnet sind. Der Ventilsitz 37 befindet sich am oberen Rand einer im Ventilgehäuse 33 ausgebildeten Bohrung 38, die achsgleich zum Stößel 20 verhäuft und sich an den Innenraum 34 anschließt. Der Ventilsitz 36 befindet sich am unteren Rand der mittigen Bohrung 39 einer Scheibe 40, die sich nahe des unteren Teiles 42 des Innenraums 34 befindet. Im dem zwischen der Scheibe 40 und dem unteren Teil 42 des Innenraums 34 gebildeten Raum 34' befindet sich eine scheibenförmige Feder 43, die auf den Ventilkörper 35 in Richtung des Stößels 20 einwirkt. Von der Bohrung 38 verläuft eine Bohrung 45 zum Äußeren des Gehäuses; an diese ist eine nicht dargestellte Pumpenleitung angeschlossen. Parallel zur Bohrung 38 verläuft im unteren Teil des Ventilgehäuses 33 eine Bohrung 46, die ebenfalls in den Raum 34' eindringt. An diese Bohrung ist ebenfalls eine nicht dargestellte Leitung angeschlossen, die zum Verbraucher führt. In den Innenraum 34 dringt oberhalb der Scheibe 40 eine Bohrung 47 ein, die Verbindung zu einem Behälter hat. Die Feder 43 ist geschlitzt und gestattet somit Durchlaß für das Druckmittel.

Die Funktionsweise des als 3/2-Wegeventil ausgebildeten Ventils ist denkbar einfach. Wenn der Magnet nicht erregt ist, drückt die Feder 43 den Ventilkörper 35 nach oben. Druckmittel fließt nun von der Pumpe über die Bohrungen 45, 38 zum Raum 34' und von diesem über die Bohrung 46 zum Verbraucher. Wird der Magnet erregt, so wird der Anker 21 zur Polscheibe 16 hin gezogen, und der Stößel 20 drückt nun den Ventilkörper 35 auf den Ventilsitz 37. Nun besteht Verbindung von der Bohrung 46 über die Bohrung 39 zur Bohrung 47 und damit zum Rücklauf. Daraus ist zu erkennen, daß das Ventil stromlos offen ist. Die Figur 1a zeigt das Ventilsymbol.

Beim Elektromagnetventil nach dem Ausführungsbeispiel der Figur 2 handelt es sich ebenfalls um ein 3/2-Magnetventil, das nun aber stromlos geschlossen ist. Das Symbol dieses Ventils ist in Figure 2a dargestellt. Dieses Elektromagnetventil verwendet genau dieselben Teile wie das zuvor geschilderte, aber mit dem Unterschied, daß nun die Polscheibe 16 und die Flanschhülse 14 vertauscht sind. Der Anker 21 ist verdreht, so daß sein Flansch 24 der Polscheibe 16 zugewandt ist. Die Umwandlung des Ventils ist deshalb so einfach, da — wie oben beschrieben — die Durchgänge 27, 29, 31, 32 bereits vorhanden sind. Wenn die Spule 12 erregt ist, wird der Anker 21 samt dem Stößel 20 zur Polscheibe 16 hin gezogen. Der Stößel gibt nun den Ventilkörper 35 frei, so daß die Feder 43 den Ventilkörper auf den Ventilsitz 36 drückt. Druckmittel kann nun von der Bohrung 45 über den Ventilsitz 37 zur Bohrung 46 und damit zum Verbraucher strömen. Ist die Spule 12 stromlos, dann drücken die Feder 25 und das Gewicht des Ankers 21 den Ventilkörper 35 auf den Ventilsitz 37, wodurch die Verbindung von der Pumpe zum Verbraucher gesperrt ist. Verbindung ist aber hergestellt von der Bohrung 46 zur Bohrung 47, d.h. vom Verbraucher zum Behälter.

Das Ausführungsbeispiel nach Figur 3 unterscheidet sich von den zwei vorhergehenden lediglich dadurch, daß der Ventilkörper nun anders ausgebildet ist. Er trägt die Bezeichnung 50 und hat zwei Kegelflächen 51, 52, die mit den betreffenden Ventilsitzen 36, 37 zusammenwirken. Als Feder dient hier eine Druckfeder 53. Die Funktion ist genau dieselbe wie oben beschrieben.

**Patentansprüche**

1. Elektromagnetventil mit einem von einer Druckfeder (25) belasteten Anker (21), der sich zwischen zwei dem magnetischen Fluß dienenden Polteilen (14, 16) führend bewegt, wobei das Elektromagnetventil durch unterschiedliche Anordnung des Ankers und der Polteile in eine "stromlos offene" oder eine "stromlos geschlossene" Stellung bringbar ist, dadurch gekennzeichnet, daß der eine Polteil (16) als Scheibe ausgebildet ist, die zugleich Abdeckung für den Elektromagneten (11) ist, daß der andere Polteil (14) als Flanschhülse ausgebildet ist, die ebenfalls zugleich Abdeckung für den Elektromagneten (11) ist und deren hülsenartiges Teil (14') als Führung für den Anker (21) dient und daß beide Polteile (14, 16) fluchtende Durchgänge (27, 29; 31, 32) für das Anschlußstück (28) der Spule (12) und für die Halteklaue (30) eines Isolierdeckels (15) haben.

2. Ventil nach Anspruch 1, dadurch gekennzeichnet, daß bei der stromlos offenen Stellung desselben die Polscheibe (16) auf der dem Ventilkörper zugewandten Seite liegt und die Flanschhülse (14) auf der entfernten Seite, und daß die auf den Anker (21) einwirkende Druckfeder (25) sich an der Flanschhülse abstützt.

3. Ventil nach Anspruch 1, dadurch gekennzeichnet, daß bei der stromlos geschlossenen Stellung die Flanschhülse (14) auf der dem Ventilkörper zugewandten Seite liegt und die Polscheibe (16) auf der entfernten Seite und daß sich die auf den Anker einwirkende Druckfeder (25) an der Polscheibe (16) abstützt.

**Revendications**

1. Electrovanne, comportant un induit (21) chargé par un ressort de pression (25) et qui se déplace en passant entre deux éléments polaires (14, 16) servant au flux magnétique, l'électrovanne étant susceptible d'être amenée, sous l'effet d'une différence de disposition de l'induit et des éléments polaires, dans une position "l'ouverte en l'absence de courant" ou une position "fermée en l'absence de courant", électrovanne caractérisée en ce que l'un des éléments polaires (16) est constitué sous la forme de disque, qui sert en même temps de recouvrement pour les électro-aimants (11), en ce que l'autre élément polaire (14) est constitué sous la forme de manchon à brides qui, de même, sert en même temps de recouvrement pour les électro-aimants (11), et dont la partie (14') formant manchon sert de guidage pour l'induit (21), et en ce que les deux éléments polaires (14, 16) comportent des passages en alignement (27, 29; 31, 32) pour la pièce de raccordement (28) de la bobine (12) et pour la griffe de maintien (30) d'un couvercle isolant (15).

2. Vanne selon la revendication 1, caractérisée en ce que, dans le cas de la position ouverte en l'absence de courant de cette vanne, le disque polaire (16) se trouve du côté situé en regard du corps de soupape, et le manchon à brides (14) du côté éloigné, et en ce que le ressort de pression (25) agissant sur l'induit (21) s'appuie contre le manchon à brides.

3. Vanne selon la revendication 1, caractérisée en ce que, dans le cas de la position fermée en l'absence de courant, le manchon à brides (14) se trouve placé du côté situé en regard du corps de soupape et le disque polaire (16) du côté éloigné, et en ce que le ressort de pression (25) agissant sur l'unduit s'appuie contre le disque polaire (16).

**Claims**

1. Solenoid valve having an armature (21) loaded by a compression spring (25), which moves conductively between two pole parts (14, 16), which serve the magnetic flux, it being possible to bring the solenoid valve into a "currentless open" or a "currentless closed" position by means of different arrangement of the armature and of the pole parts, characterized in that one pole part (16) is constructed as a disc, which is simultaneously a cover for the electromagnet (11), in that the other pole part (14) is constructed as a flanged sleeve, which likewise is simultaneously a cover for the electromagnet (11), and whose sleeve-like part (14') serves as a guide for the armature (21), and in that the two pole parts (14, 16) have aligned passages (27, 29; 31, 32) for the connecting piece (28) of the coil (12) and for the fixing claw (30) of an insulating cover (15).

2. Valve according to Claim 1, characterized in that in the case of the currentless open position thereof, the pole disc (16) is located on the side facing the valve body and the flanged sleeve (14) is located on the remote side, and in that the compression spring (25) acting on the armature (21) is supported on the flanged sleeve.

3. Valve according to Claim 1, characterized in that the case of the currentless closed position, the flanged sleeve (14) is located on the side facing the valve body and the pole disc (16) is located on the remote side, and in that the compression spring (25) acting on the armature is supported on the pole disc (16).

FIG.1A

FIG.1

FIG.2A

FIG.2

# FIG.3